# EUROPEAN PATENT APPLICATION

(11) **EP 4 390 773 A1**
(43) Date of publication of application: **26.06.2024**
(21) Application number: 22214556.7
(22) Date of filing: 19.12.2022
(51) Int. Cl.: G06N 3/084, G06N 5/01, G06N 7/01, G06N 20/10, G06N 20/20

(54) **PREDICTING THE RELIABILITY OF OUTPUT DATA**

(71) Applicant: Koninklijke Philips N.V., 5656 AG Eindhoven (NL)
(72) Inventor: VAN LEEUWEN, Marinus Bastiaan, Eindhoven (NL); VLUTTERS, Ruud, Eindhoven (NL); SAEED, Aaqib, Eindhoven (NL)
(74) Representative: Philips Intellectual Property & Standards

(57) **Abstract**

A mechanism for determining the reliability of a machine-learning model. A first processing system processing input and/or output data for the machine-learning model to predict a reliability of the model. If the reliability meets one or more predetermined criteria, the input and/or output data is passed to a second processing device that also predicts a reliability of the model. The prediction process used by the second processing device is more resource-intensive than the prediction process used by the first processing device.

## Description

### FIELD OF THE INVENTION

The present invention relates to the field of assessing the reliability of data.

### BACKGROUND OF THE INVENTION

It is becoming increasingly common to use machine-learning models in a wide variety of products and environments. Typically, a machine-learning model will process (an instance of) input data in order to produce (an instance of) output data.

After deployment of a machine-learning model in a product, it is important to monitor the quality of the performance of the model, i.e., the reliability and/or accuracy of the output data produced by the model. For instance, new input data for the model may differ from the data that the model was originally trained on, e.g., because of data drift or because of difference in the use of the product. If new input data differs from the data the model was trained on, then proper or reliable performance of the model cannot be guaranteed.

There is therefore a desire for effective and efficient assessment of the reliability of the machine-learning model. More specifically, there is a desire for effective and efficient assessment of the reliability of output data produced by a machine-learning model after processing input data.

It is well known that a reliability is a (numeric) measure of how reliable output data produced by the machine-learning model is. More particularly, it is well known that a reliability can be seen as a numeric estimate of the trustworthiness of, and/or uncertainty in, the output produced by the machine learning model.

### SUMMARY OF THE INVENTION

The invention is defined by the claims.

According to examples in accordance with an aspect of the invention, there is provided a computer-implemented method for predicting the reliability of output data produced by a machine-learning model after processing input data.

The computer-implemented method comprises: processing, at a first processing device, the input data and/or the output data using a first reliability prediction algorithm to produce a first prediction of the reliability of the output data; and responsive to the first prediction of the reliability of the output data indicating that the reliability meets one or more predetermined criteria: providing the input data and/or the output data to a second processing device, different to the first processing device; and processing, at the second processing device, the input data and/or the output data using a second reliability prediction algorithm to produce a second prediction of the reliability of the output data. The first reliability prediction algorithm uses fewer processing resources than the second reliability prediction algorithm.

The present invention proposes the use of a "light-weight" (first) algorithm and a "heavy-weight" (second) algorithm each configured to determine the reliability of output data produced by a machine-learning method that processes input data. The lightweight algorithm is used by a first processing device. The heavy-weight algorithm is used by a different, second processing device. The heavy-weight algorithm is only used if the light-weight algorithm identifies or predicts that the reliability of the output data fails to meet one or more predetermined requirements or criteria (e.g., is not sufficiently reliable).

Thus, the light-weight algorithm effectively acts as a filter for input and/or output data to be sent to the second processing device to be processed using the heavy-weight algorithm. It has been recognized that the transmission of data is extremely resource intensive, and can use a significant amount of power, memory and/or bandwidth. The proposed technique reduces the amount of data that is sent to be processed at the second processing device.

The proposed approach also reduces the processing resource required at the first processing device whilst still maintaining accurate prediction of the reliability of the output data.

The present invention effectively proposes the distribution of workload for identifying unreliable instances of output data (and corresponding input data). Two separate algorithms for predicting reliability of output data are used, of which one is only executed if the other identifies unreliable output data. This avoids the need for a first processing device to perform a resource-intensive algorithm whilst also reducing the amount of data sent to a second, different processing device that performs the resource-intensive algorithm.

The proposed approach also reduces the overall number of times that a highly resource intensive algorithm is used, as the lightweight algorithm effectively acts as a filter.

The proposed approach thereby provides a system for more efficient post market monitoring of the reliability of the machine-learning model. Elements of the proposed approach include efficient use of available processing power, reduction of workload, and collection of relevant data.

In some embodiments, the computer-implemented method comprises, responsive to the first prediction of the reliability of the output data indicating that the reliability does not meet the one or more predetermined criteria, failing to provide the input data to the second processing device. This embodiment explicitly avoids the need to send data to the second processing device if it is not required.

In preferred examples, the first reliability prediction algorithm is less accurate than the second reliability prediction algorithm. Generally, more accurate reliability prediction algorithms are more resource intensive, e.g., require more processing resource to execute than less accurate reliability prediction algorithms. A processing resource is any form of resource that affects an amount of power and/or processing capability used (e.g., materially more expensive or complex processing circuitry).

The first prediction of the reliability may define a numeric value indicating a predicted reliability. This matches known or conventional approaches for measuring or otherwise quantifying a predicted reliability.

In preferred examples, the one or more predetermined criteria includes a first criterion that the numeric value of the first prediction of the reliability breaches a first predetermined threshold.

The first predetermined threshold may, for instance, be a threshold that represents the first prediction indicating that the output data is more likely to be unreliable than reliable. For instance, the first predetermined threshold may be equal to 0.5 times the maximum value for the numeric value.

In examples (assuming that larger values of the numeric value indicate increasing predicted reliability), the first predetermined threshold may be a value of from 0.3 and 0.7 times the maximum value for the numeric value, e.g., of from 0.3 to 0.5 times the maximum value for the numeric value.

Determining whether the numeric value breaches a first predetermined threshold may comprise determining whether the numeric value is above or below the numeric threshold. The precise choice depends upon whether larger or smaller values of the numeric value indicate increasing predicted reliability.

The first processing device may be carried by a portable device configured to be rechargeable. Suitable examples of portable devices include personal health care devices such as toothbrushes, oral irrigators, shavers, epilators, electric razors, intense pulsed light therapy devices and so on.

Preferably, the portable device is a device that is sized and/or shaped to be holdable by a single hand (e.g., of the average adult human).

The step of providing the input data and/or the output data to the second processing device may be performed only when the portable device is connected to a power source for charging or recharging the portable device. This reduces or avoids the risk that battery resource will be expended upon performing the first reliability prediction algorithm during active use of the portable device, thereby causing user frustration. This embodiment recognizes that the use for reliability information is not immediate, and therefore generation of the same can wait until the portable device is "plugged in" or is being charged.

In some examples, the step of processing, at the first processing device, the input data and/or the output data is performed only when the portable device is connected to the power source for charging or recharging the portable device. This approach also reduces a use of the (limited) battery and/or processing resource of the portable device.

In some embodiments, the step of providing the input data and/or the output data to the second processing device comprises using one or more intermediary processing devices to pull the input data and/or output data from the first processing device and provide the pulled input and/or output data to the second processing device.

Preferably, at least one of the one or more intermediary processing devices is carried by a charging station for charging a portable device that carries the first processing device.

In some examples, at least one of the one or more intermediary processing devices comprises a cloud storage system for storing the input data and/or output data.

There is also proposed the input data comprises a plurality of different instances of input data that are each separately processable by the machine-learning model.

The output data comprises a plurality of different instances of output data produced by the machine-learning model separately processing different instances of input data.

Preferably, the input data comprises sensor data produced by a sensor carried by a same portable device that carries the first processing device. Thus, the first processing device may form part of a same portable device that produces sensor data the contributes to the input data processed by the machine-learning model.

Preferably, the portable device is a personal health/care device such as a toothbrush. Other examples of personal health/care devices include oral irrigators, shavers, epilators, electric razors, intense pulsed light therapy devices and so on. Embodiments are particularly advantageous in these circumstances, as such personal health/care devices typically have only limited processing resource (e.g., a simple or less powerful processor) and/or memory storage space. Accordingly, the processing resource of such devices is limited, such that they may be incapable of executing the second reliability prediction algorithm within a reasonable period of time. Moreover, use of a resource-intensive reliability prediction algorithm would significantly drain the battery of such a portable device, which could affect a user experience or limit an amount of time that a user can use such a personal health/care device for its intended or main purpose.

The method may further comprise, responsive to the second prediction of the reliability of the output data indicating that the reliability meets one or more second predetermined criteria retraining or further training the machine-learning model using the input data and/or output data.

In some examples, the method comprises, responsive to the second prediction of the reliability of the output data indicating that the reliability meets one or more second predetermined criteria, controlling a user interface to provide a user-perceptible indication of the second prediction of the reliability.

There is also proposed a computer program product comprising computer program code means which, when executed by a distributed system comprising a first processing device and a second processing device, causes the distributed system to perform all of the steps of any herein described method. There is also provided a non-transitory storage medium that stores the computer program product.

There is also proposed a distributed system for predicting the reliability of output data produced by a machine-learning model after processing input data. The distributed system comprises a first processing device and a second processing device.

The first processing device is configured to: process the input data and/or the output data using a first reliability prediction algorithm to produce a first prediction of the reliability of the output data; and responsive to the first prediction of the reliability of the output data indicating that the reliability meets one or more predetermined criteria, provide the input data and/or the output data to a second processing device, different to the first processing device.

The second processing device is configured to process any received input data and/or output data using a second reliability prediction algorithm to produce a second prediction of the reliability of the output data.

The first reliability prediction algorithm uses fewer processing resources than the second reliability prediction algorithm.

The distributed system may comprise a portable device that carries the first processing device, the portable device further comprising a sensor configured to generate sensor data, wherein the input data comprises the sensor data.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 illustrates a distributed system in which embodiments may be employed;
Fig. 2 is a flowchart illustrating a method according to an embodiment; and
Fig. 3 illustrates a processing device.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for determining the reliability of a machine-learning model. A first processing system processing input and/or output data for the machine-learning model to predict a reliability of the model. If the reliability meets one or more predetermined criteria, the input and/or output data is passed to a second processing device that also predicts a reliability of the model. The prediction process used by the second processing device is more resource-intensive than the prediction process used by the first processing device.

The present invention relates to a mechanism for determining the reliability of output data produced by a machine-learning model. The proposed approach provides a more efficient approach for determining the reliability by exploiting distributed processing. Thus, resource-intensive determination of the reliability is performed more efficiently, based on technical considerations of the distributed system.

The exact procedure performed by the machine-learning model is immaterial to the underlying approach adopted by the present invention. It is noted that a machine-learning model is any self-training algorithm that processes input data in order to produce or predict output data.

Examples of suitable machine-learning models include decision tree algorithms and artificial neural networks. Other machine-learning models such as logistic regression, support vector machines or Naive Bayesian models are suitable alternatives.

Methods of training a machine-learning model are well known. Typically, such methods comprise obtaining a training dataset, comprising training input data entries and corresponding training output data entries. An initialized machine-learning model is applied to each input data entry to generate predicted output data entries. An error between the predicted output data entries and corresponding training output data entries is used to modify the machine-learning model. This process can be repeated until the error converges, and the predicted output data entries are sufficiently similar (e.g., ±1%) to the training output data entries. This is commonly known as a supervised learning technique.

For example, where the machine-learning model is formed from a neural network, (weightings of) the mathematical operation of each neuron may be modified until the error converges. Known methods of modifying a neural network include gradient descent, backpropagation algorithms and so on.

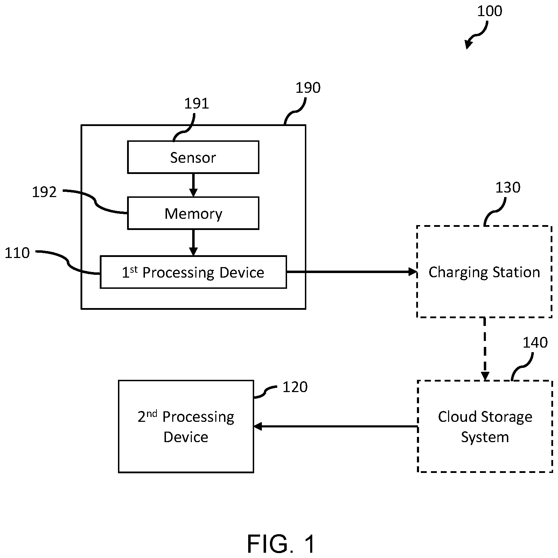

Fig. 1 illustrates a distributed system 100 in which embodiments of the invention can be employed. In particular, the distributed system 100 is capable of performing a computer-implemented method for predicting the reliability of output data produced by a machine-learning model after processing input data.

The distributed system 100 comprises a first processing device 110 and a second processing device 120. The first processing device 110 is less computationally efficient and/or less powerful than the second processing device 120.

The first processing device 110 is configured to process the input data and/or the output data using a first reliability prediction algorithm to produce a first prediction of the reliability of the output data. It will be appreciated that a reliability of the output data is functionally equivalent to a reliability of the machine-learning method in producing this output data.

The first processing device 110 is also configured to, responsive to the first prediction of the reliability of the output data indicating that the reliability meets one or more predetermined criteria, provide the input data and/or the output data to the second processing device 120, different to the first processing device. The one or more predetermined criteria preferably includes at least a criterion that the reliability of the output data is potentially unreliable.

Thus, the first processing device 110 is effectively configured to flag or identify any instances of input data and/or corresponding output data for which for the reliability of the output data (produced by a machine-learning model processing input data) is identified as being potentially unreliable.

The first processing device 110 is preferably the same processing device that uses the machine-learning model to process input data to produce output data.

The second processing device 120 is configured to process any received input data and/or output data using a second reliability prediction algorithm to produce a second prediction of the reliability of the output data.

The second processing device 120 thereby effectively processes the flagged input and/or output data to assess or determine the reliability of the output data.

The first reliability prediction algorithm uses fewer processing resources than the second reliability prediction algorithm. Thus, the two algorithms are different to one another. In particular, the first reliability prediction algorithm may be less accurate or less thorough than the second reliability prediction algorithm. In this way, the second reliability prediction algorithm may determine or make the final decision on the reliability assessment, e.g., to disagree or agree with the first reliability prediction algorithm.

One example of a suitable first reliability prediction algorithm is an algorithm that compares one or more statistical properties (e.g., mean, variance, range, inter-percentile range and/or standard variation) of the input data with corresponding one or more statistical properties of training input data that was used to train the machine-learning model (i.e., input data of the training dataset used to train the machine-learning model). A measure of the difference or error between the statistical property/properties of the input data and the training input data represents or changes responsive to a reliability of the output data after processing of said input data by the machine-learning model.

Another example of a suitable first reliability prediction algorithm is an algorithm that compares the distribution of values in the output data produced by the machine-learning model (or the values observed in a predetermined layer of the machine-learning model), with the distribution of corresponding values in the training set. A measure of the difference or error between these values represents or changes responsive to a reliability of the output data after processing of said input data by the machine-learning model.

In either example, a thresholding process may be applied to the produced measure of difference or error in order to produce the first prediction of the reliability. For instance, measures above a certain threshold may represent a prediction that the output data is unreliable (e.g., a value of "1"), whereas measures below this threshold may represent a prediction that the output data is reliable (e.g., a value of "0").

These examples demonstrate how either the input data or the output data can be processed to produce the first prediction of the reliability of the output data.

Example of suitable second reliability prediction algorithms include algorithms that assess the reliability of the algorithm output are part of uncertainty estimation, OOD (out-of-domain) detection, or anomaly detection. It is noted that a large variety of methods have been previously proposed that address different aspects of the problem of reliability prediction, which vary in (computational) complexity and in completeness of the detection of model reliability. Algorithms for assessing model reliability can be computational expensive, e.g., the well-known Test Time Dropout method.

Some examples of second reliability prediction algorithms may use of state-of-the-art uncertainty estimation techniques that predict model reliability or one or more values responsive to reliability. Example techniques may be sub-divided into at least three categories: a) model output, b) gradient and c) feature space. Each or any value produced by performing a process in any one of categories a) to c) can represent a preliminary reliability value, i.e., a score or value that changes responsive to changes in the reliability. These preliminary reliability values can then be further processed to produce the second prediction of the reliability of the output data. Alternatively, any score or value output by a technique falling within one of these categories can itself be used to directly define a second prediction of the reliability.

Examples of techniques that fall into category a) include those that calculate one or more temperature scaled energy scores and/or entropy by processing the output data. Approaches for processing output data to produce such values are well-established in the art.

In techniques that fall into category b), a gradient norm technique is utilized, which hints at having large norm for in-domain (similar to the instances/session used for model training) examples.

One technique that falls within category c) employs a k-nearest neighbors' approach to find the distances of the k-closest instances of training input data in a training dataset to the input data. A maximum distance among that set can act as a measure of reliability or preliminary reliability value (e.g., the larger the distance, the greater the uncertainty).

One approach for automatically combining or processing any preliminary reliability values produced using techniques of any previously mentioned category, i.e., to produce a single prediction of reliability, is to use a classifier, such as a one-class Support Vector Machine (SVM) algorithm. Any preliminary reliability value(s) (computed as previously mentioned) may act as (input) features for inputting to the classifier. The classifier may process the preliminary reliability value(s) to produce the second prediction of reliability, e.g., in the form of a probability that the input data is to be classed as "unreliable". The classifier may be trained using a/the training set, e.g., the training dataset used to train the (original) machine-learning model.

Another approach makes use of threshold-based rules. For instance, a domain expert may analyze the preliminary reliability values produced by processing data of a training dataset (and optionally preliminary reliability value produced by processing input data provided by the first processing device) and establish a threshold value for each preliminary reliability value above which input and/or output data is flagged as unreliable.

Contrary to this, a classifier or other anomaly detection technique can infer optimal (i.e., certain behavior) from the input and/or output data itself. These two approaches can therefore be combined.

The proposed approach thereby makes use of two different reliability prediction algorithms, of different processing resource requirements, that are executed by two different processing devices. A first reliability prediction algorithm (requiring less processing resource) effectively acts a filter for data to be processed using the second reliability prediction algorithm (requiring more processing resource). This distributed responsibility reduces the amount of processing resource required for the first processing device without significantly increasing the amount of data transmitted to the second processing device, e.g., compared to an approach in which the first processing device performs the reliability prediction algorithm by itself. Moreover, use of the first reliability prediction algorithm performs a pre-selection task that reduce the workload of the second processing device that performs a thorough, but more computationally expensive, reliability assessment.

As previously mentioned, the input data and/or output data is (only) provided to the second processing device when the first prediction of reliability meets one or more predetermined criteria.

A suitable example of a predetermined criterion for the one or more predetermined criteria is that a numeric value of the first prediction breaches a first predetermined threshold.

The value of the first predetermined threshold may be defined by a suitable expert.

In other examples, the value of the first predetermined threshold may be defined based on a maximum possible value for the numeric value of the first prediction, e.g., a predetermined proportion or percentage. Assuming that larger values for the numeric value indicate increasing unreliability, then the value of the first predetermined threshold may be value of from 0.3 and 0.7 times the maximum value for the numeric value, e.g., of from 0.3 to 0.5 times the maximum value for the numeric value. As a particular example, the value of the first predetermined threshold may be equal to 0.5 times the maximum value for the numeric value. This approach effectively identifies when the output data is considered to be more likely to be unreliable than reliable, and therefore suitable for further processing and/or checking.

Another example approach for defining the value of the first predetermined threshold is to make use of a validation set. In particular, the validation set may contain a plurality of example instances of input and/or output data ("instances of validation data") each labelled as "inlier" or "outlier". Inlier instances of validation data ("inliers") are instances of input and/or output data for which processing using the machine-learning model is performed reliably. Outlier instances of validation data ("outliers") are instances of input and/or output data for which processing using the machine-learning model is performed unreliably. The numeric value output by processing an instance of validation data using the first reliability prediction algorithm should therefore be greater when processing outliers compared to inliers (assuming that larger values for the numeric value indicate increasing unreliability).

The first predetermined threshold may be set or defined to balance true/false positives and true/false negatives, e.g., to achieve a desired or predetermined balance. In the present case, true negatives would be the inliers are correctly classified as reliable. False positives would be when inliers are incorrectly classified as unreliable. This way of setting the first predetermined threshold allows for selection of a conservative threshold, e.g., a threshold that would result in a relatively small chance of missing true positive at the expense of increased chance of classifying an inlier incorrectly as unreliable (false positive).

Approaches for using such approaches to determine a threshold for a reliability are known in the art.

Another example of a predetermined criterion for the one or more criteria is that the first prediction indicates that the output data is not reliable. This may, for instance, be in the form of a classification performed by the first prediction of the reliability of the output data.

Proposed techniques are particularly advantageous when the first processing device has restricted or limited processing resource, e.g., when the first processing device is carried by a portable device 190.

To further reduce the transfer of data over resource-expensive channels, the first processing device may be integrally formed or carried by a same device 190 that carries a sensor 191 that produces sensor data for the input data.

Preferably, the sensor data comprises data responsive to a usage or interaction between the user and the device 190.

Similarly, the first processing device may the same processing device that uses the machine-learning model to process the input data to produce the output data. Thus, one task of the first processing device may be to apply the machine-learning model on input data, e.g., produced by a sensor of the device carrying the first processing device.

The portable device is preferably a personal health/care device. Such devices can produce important sensor data (e.g., to contribute to the input data) that can indicate a sign and/or symptom of a user of the portable device. In particular, one use-case scenario for a machine-learning model is to process sensor data produced by such a personal health/care device in order to determine one or more characteristics of the use of the device and/or of the user of the device.

The portable device may be a rechargeable device.

In some examples, to improve a user experience in using the portable device, the first processing device 110 may be configured to only provide data to the second processing device when the portable device (which carried the first processing device) is charging or is connected to a power source for charging, i.e., when "plugged in". This reduces a likelihood that the portable device will become unable to perform its primary function (e.g., performing a health/care function) due to power loss used for transmitting data.

In some examples, to further improve a user experience in using the portable device, the first processing device 110 may be configured to only process the input and/or output data using the first reliability prediction algorithm when the portable device (which carried the first processing device) is charging or is connected to a power source for charging, i.e., when "plugged in". This also reduces a likelihood that the portable device will become unable to perform its primary function (e.g., performing a health/care function) due to power loss used for processing the input and/or output data with the first reliability prediction algorithm.

The device 190 that carries the first processing device may further comprise a memory or storage unit 192. The memory 192 may be configured to store the sensor data produced by the sensor 191 for processing. This facilitates temporary buffering or storage of the sensor data, e.g., for later processing using the first reliability prediction algorithm. This provision and use of the memory 192 may be needed, for instance, if the first processing device 110 is configured to only provide the input and/or output data to the second processing device, and/or process the input and/or output data, when the portable device (which carried the first processing device) is charging or is connected to a power source for charging, i.e., when "plugged in".

In some examples, the distributed system further comprises one or more intermediate processing devices 130, 140. The intermediate processing devices may, for instance, control the provision of data to/from the first and second processing devices. Thus, data provided from the first processing device to the second processing device may be transmitted by the intermediate processing device(s) 130, 140.

In particular, at least one of the intermediate processing devices may be configured to pull the input data and/or output data from the first processing device and provide the pulled input and/or output data to the second processing device. It will be apparent that the pulled input and/or output data comprises only the data for which the first prediction of the reliability of the output data indicates that the reliability meets one or more predetermined criteria.

One of the intermediate processing devices 130 may, if present, be a charging station for the portable device 190 carrying the first processing device 110. Thus, a charging station (configured to charge the portable device) may be used to route information from the first processing device 110 to the second processing device. If the charging station is configured to pull the input data and/or output data from the first processing device and provide the pulled input and/or output data to the second processing device, then it may be configured to pull this data only when the portable device 190 is connected thereto, e.g., for charging.

One of the intermediate processing devices 140 may be a cloud storage system for storing the input data and/or the output data. Such a cloud storage system may, for instance, be used to store several instances of input and/or output data that have been identified by the first reliability prediction algorithm as being potentially unreliable.

The second processing device 120 may, for instance, be a remote server or cloud computing server that hosts or is able to execute the second reliability prediction algorithm.

As previously explained, the second processing device produces a second prediction of the reliability of output data that has been produced by processing input data using a particular machine-learning model.

There are various uses for the second prediction of the reliability of the output data. In particular, various actions can be taken if the second prediction of the reliability of the output data indicates that the output data is unreliable - e.g., if it meets one or more second predetermined criteria. The second predetermined criteria may be similar to the first predetermined criteria, e.g., comprise a criterion that a numeric value for the second prediction of the reliability breaches a second predetermined threshold.

In one example, responsive to the second prediction of the reliability of the output data indicating that the reliability meets one or more second predetermined criteria, the second processing system may retrain or further train the machine-learning model using the input data and/or output data. In particular, the input data corresponding to the output data may be added to a training dataset (e.g., as additional training input data entries) for training a machine-learning model. Corresponding example output data for the input data may be provided, e.g., by a suitably qualified or experienced expert. More particularly, the input data may undergo manual or semi-automatic labelling to produce example output data. Alternatively, the input data may be added to the training dataset as example input data without labels to strengthen a self-supervised training procedure.

In another example, responsive to the second prediction of the reliability of the output data indicating that the reliability meets one or more second predetermined criteria, the second processing system may control a user interface to provide a user-perceptible indication of the second prediction of the reliability. The user interface 195 may, for instance, be carried by the device 190 that carries the first processing device 110. This approach provides a user of the device with feedback for understanding that data produced by the machine-learning method is unreliable. This is particularly advantageous if the output data is presented to the user.

As another example, responsive to the second prediction of the reliability of the output data indicating that the reliability meets one or more second predetermined criteria, the second processing system may flag the output data for use in further processing the output data. For instance, the output data may be designed to be further processed by a further processing system. Flagging the output data may permit such a further processing system to ignore or otherwise take into account the unreliability of the output data (e.g., to attach less weight or significance to the flagged output data).

As yet another example, responsive to the second prediction of the reliability of the output data indicating that the reliability meets one or more second predetermined criteria, the second processing system may instruct that the output data be discarded (e.g., by the device 190 or the cloud storage system 140 if present). This can prevent or avoid unreliable data from being preserved.

The above examples provide a small sample of possible methods or steps that could be performed using the second prediction of the reliability of the output data. Other steps or procedures will be readily apparent to the skilled person.

In one optional improvement to the proposed distributed system 100, the first and/or second processing device may be configured to process the input data to predict whether or not the input data comprise any abnormalities and/or anomalous results.

Responsive to a positive determination, a user-perceptible alert may be generated (e.g., to ask the user to check whether the element that produces the input data, such as a sensor 191, is broken). Generating a user-perceptible alert may comprise controlling a display to provide a visual alert, a speaker to provide an audible alert and/or a haptic element to provide haptic feedback.

If the first processing device processes the input data to predict whether or not the input data comprise any abnormalities and/or anomalous results, the first processing device may be configured to, responsive to a positive determination, exclude the input data from being transmitted to the second processing device.

These embodiments are based on the recognition that if the input data contains abnormal data, then the machine-learning model will be unable to correctly process this information resulting in uncertain or unreliable output data. For this special case, it might be better to recommend the user to check the device for any broken sensing equipment or avoid processing of the data.

Thus, this approach effectively performs an explicit check as to whether any unreliability of the machine-learning model originates from abnormal input data, e.g., an abnormal sensor output due to an error or the like.

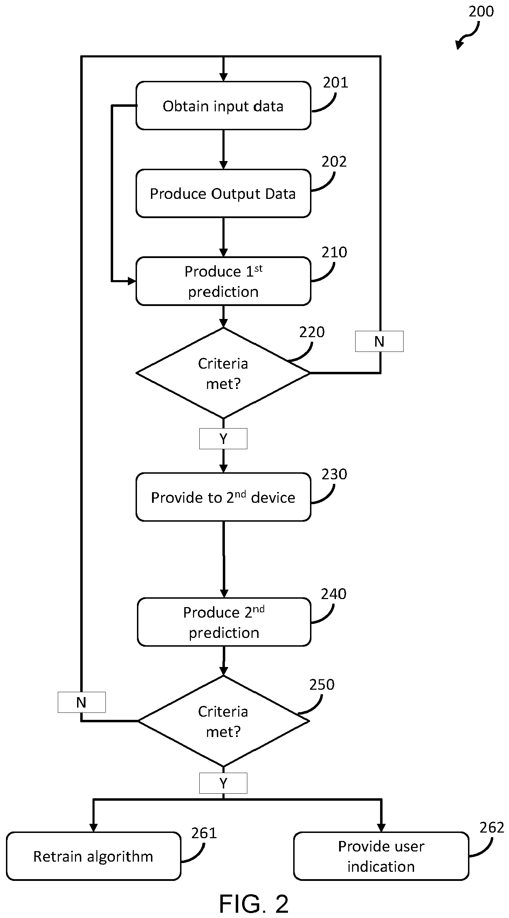

Fig. 2 is a flowchart illustrating a computer-implemented method 200 for predicting the reliability of output data produced by a machine-learning model after processing input data.

The computer-implemented method comprises a step 210 of processing, at a first processing device, the input data and/or the output data using a first reliability prediction algorithm to produce a first prediction of the reliability of the output data.

The computer-implemented method also comprises a step 220 of determining whether or not the first prediction of the reliability of the output data meets one or more predetermined criteria.

Responsive to a positive determination in step 220, the method 200 moves to a step 230 of providing the input data and/or the output data to a second processing device, different to the first processing device. Step 230 may be performed by the first processing device and/or by one or more intermediate processing devices (e.g., pulling the data from the first processing device).

Responsive to a negative determination in step 220, the method 200 may restart.

After performing step 230, the method 200 moves to a step 240 of processing, at the second processing device, the input data and/or the output data using a second reliability prediction algorithm to produce a second prediction of the reliability of the output data.

The first reliability prediction algorithm uses fewer processing resources than the second reliability prediction algorithm, e.g., less electrical power and/or less processing resource.

In some examples, the method 200 may comprise steps 201, 202 for obtaining/producing the input and output data. However, this is not essential, and the method can be performed with previously produced input and/or output data.

Step 201 comprises obtaining the input data. This may be performed by obtaining sensor data at a sensor carried by a device that carries the first processing device.

Step 202 comprises producing output data. This is performed by processing the input data using the machine-learning model. Step 202 may be performed by the first processing device.

The method may also comprise a step 250 of determining whether or not the second prediction of the reliability of the output data meets one or more second predetermined criteria.

Responsive to a positive determination in step 250, the method 200 may perform any number of steps using the second prediction of the reliability. Two example steps 261, 262 are illustrated in Fig. 2. Otherwise, the method 200 may restart.

Step 261 comprises retraining or further training the machine-learning model using the input data and/or output data. Step 262 comprises controlling a user interface to provide a user-perceptible indication of the second prediction of the reliability.

Embodiments make use of processing devices. Each processing device can be implemented in numerous ways, with software and/or hardware, to perform the various functions required. A processor is one example of a processing device which employs one or more microprocessors that may be programmed using software (e.g., microcode) to perform the required functions. A processing device may however be implemented with or without employing a processor, and also may be implemented as a combination of dedicated hardware to perform some functions and a processor (e.g., one or more programmed microprocessors and associated circuitry) to perform other functions.

Examples of processing device components that may be employed in various embodiments of the present disclosure include, but are not limited to, conventional microprocessors, application specific integrated circuits (ASICs), and field-programmable gate arrays (FPGAs).

In various implementations, a processor or processing device may be associated with one or more storage media such as volatile and non-volatile computer memory such as RAM, PROM, EPROM, and EEPROM. The storage media may be encoded with one or more programs that, when executed on one or more processors and/or processing devices, perform the required functions. Various storage media may be fixed within a processor or processing device or may be transportable, such that the one or more programs stored thereon can be loaded into a processor or processing device.

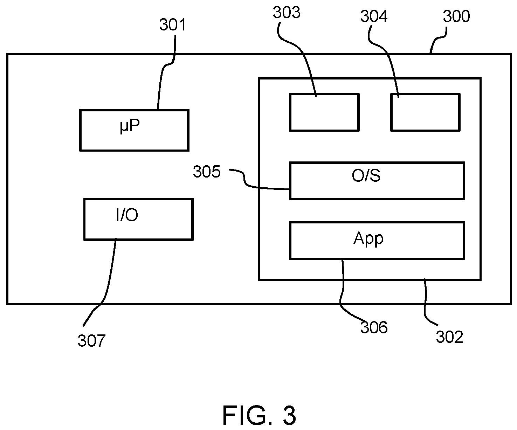

By way of further example, Fig. 3 illustrates an example of a processing device 300 within which one or more parts of an embodiment may be employed. Various operations discussed above may utilize the capabilities of the processing device 300. For example, one or more parts of a system for generating a prediction of a reliability may be incorporated in any element, module, application, and/or component discussed herein.

Generally, in terms of hardware architecture, the processing device 300 may include one or more processors 301 or processing circuitry, memory 302, and one or more I/O devices 307 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 301 is a hardware device for executing software that can be stored in the memory 302. The processor 301 can be virtually any custom made or commercially available processor, a central processing unit (CPU), a digital signal processor (DSP), or an auxiliary processor among several processors associated with the processing device 300, and the processor 301 may be a semiconductor-based microprocessor (in the form of a microchip) or a microprocessor.

The memory 302 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 302 may incorporate electronic, magnetic, optical, and/or other types of storage media.

The software in the memory 302 may include one or more separate programs, each of which comprises an ordered listing of executable instructions for implementing logical functions. The software in the memory 302 includes a suitable operating system (O/S) 305, compiler 304, source code 303, and one or more applications 306 in accordance with exemplary embodiments. As illustrated, the application 306 comprises numerous functional components for implementing the features and operations of the exemplary embodiments. The application 306 of the processing device 300 may represent various applications, computational units, logic, functional units, processes, operations, virtual entities, and/or modules in accordance with exemplary embodiments, but the application 306 is not meant to be a limitation.

The operating system 305 controls the execution of other processing device programs, and provides scheduling, input-output control, file and data management, memory management, and communication control and related services. It is contemplated by the inventors that the application 306 for implementing exemplary embodiments may be applicable on all commercially available operating systems.

Application 306 may be a source program, executable program (object code), script, or any other entity comprising a set of instructions to be performed. When a source program, then the program is usually translated via a compiler (such as the compiler 304), assembler, interpreter, or the like, which may or may not be included within the memory 302, so as to operate properly in connection with the O/S 305. Furthermore, the application 306 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 307 may include input devices such as, for example but not limited to, a mouse, keyboard, scanner, microphone, camera, etc. Furthermore, the I/O devices 307 may also include output devices, for example but not limited to a printer, display, etc. Finally, the I/O devices 307 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc.

The I/O devices 307 also include components for communicating over various networks, such as the Internet or intranet. In the context of the present disclosure, this allows the first processing device to communicate with the second processing device (e.g., over the Internet).

The software in the memory 302 may further include a basic input output system (BIOS) (omitted for simplicity). The BIOS is a set of essential software routines that initialize and test hardware at startup, start the O/S 305, and support the transfer of data among the hardware devices. The BIOS is stored in some type of read-only-memory, such as ROM, PROM, EPROM, EEPROM or the like, so that the BIOS can be executed when the processing device 300 is activated.

When the processing device 300 is in operation, the processor 301 is configured to execute software stored within the memory 302, to communicate data to and from the memory 302, and to generally control operations of the processing device 300 pursuant to the software. The application 306 and the O/S 305 are read, in whole or in part, by the processor 301, perhaps buffered within the processor 301, and then executed.

When the application 306 is implemented in software it should be noted that the application 306 can be stored on virtually any processing device readable medium for use by or in connection with any processing device related system or method. In the context of this document, a processing device readable medium may be an electronic, magnetic, optical, or other physical device or means that can contain or store a processing device program for use by or in connection with a processing device related system or method.

The application 306 can be embodied in any processing device-readable medium for use by or in connection with an instruction execution system, apparatus, or device, such as a processing device-based system, processor-containing system, or other system that can fetch the instructions from the instruction execution system, apparatus, or device and execute the instructions. In the context of this document, a "processing device-readable medium" can be any means that can store, communicate, propagate, or transport the program for use by or in connection with the instruction execution system, apparatus, or device. The processing device readable medium can be, for example but not limited to, an electronic, magnetic, optical, electromagnetic, infrared, or semiconductor system, apparatus, device, or propagation medium.

It will be understood that disclosed methods are preferably computer-implemented methods. As such, there is also proposed the concept of a computer program comprising code means for implementing any described method when said program is run by a distributed system comprising a first processing device and a second processing device. Thus, different portions, lines or blocks of code of a computer program according to an embodiment may be executed by a distributed system to perform any herein described method.

There is also proposed a non-transitory storage medium that stores or carries a computer program or computer code that, when executed by a distributed system comprising a first processing device and a second processing device, causes the processing system to carry out any herein described method.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

## Claims

1. A computer-implemented method for predicting the reliability of output data produced by a machine-learning model after processing input data, the computer-implemented method comprising:
processing, at a first processing device, the input data and/or the output data using a first reliability prediction algorithm to produce a first prediction of the reliability of the output data; and
responsive to the first prediction of the reliability of the output data indicating that the reliability meets one or more predetermined criteria:
providing the input data and/or the output data to a second processing device, different to the first processing device; and
processing, at the second processing device, the input data and/or the output data using a second reliability prediction algorithm to produce a second prediction of the reliability of the output data,
wherein the first reliability prediction algorithm uses fewer processing resources than the second reliability prediction algorithm.

2. The computer-implemented method of claim 1, wherein the computer-implemented method comprises, responsive to the first prediction of the reliability of the output data indicating that the reliability does not meet the one or more predetermined criteria, failing to provide the input data to the second processing device.

3. The computer-implemented method of any of claims 1 or 2, wherein the first reliability prediction algorithm is less accurate than the second reliability prediction algorithm.

4. The computer-implemented method of any of claims 1 to 3, wherein:
the first prediction of the reliability defines a numeric value indicating a predicted reliability; and
the one or more predetermined criteria includes a first criterion that the numeric value of the first prediction of the reliability breaches a first predetermined threshold.

5. The computer-implemented method of any of claims 1 to 4, wherein:
the first processing device is carried by a portable device configured to be rechargeable; and
the step of providing the input data and/or the output data to the second processing device is performed only when the portable device is connected to a power source for charging or recharging the portable device.

6. The computer-implemented method of claim 5, wherein the step of processing, at the first processing device, the input data and/or the output data is performed only when the portable device is connected to the power source for charging or recharging the portable device.

7. The computer-implemented method of any of claims 1 to 6, wherein the step of providing the input data and/or the output data to the second processing device comprises using one or more intermediary processing devices to pull the input data and/or output data from the first processing device and provide the pulled input and/or output data to the second processing device.

8. The computer-implemented method of claim 7, wherein at least one of the one or more intermediary processing devices is carried by a charging station for charging a portable device that carries the first processing device.

9. The computer-implemented method of claim 7 or 8, wherein at least one of the one or more intermediary processing devices comprises a cloud storage system for storing the input data and/or output data.

10. The computer-implemented method of any of claims 1 to 9, wherein:
the input data comprises a plurality of different instances of input data that are each separately processable by the machine-learning model; and/or
the output data comprises a plurality of different instances of output data produced by the machine-learning model separately processing different instances of input data.

11. The computer-implemented method of any of claims 1 to 10, wherein the input data comprises sensor data produced by a sensor carried by a same portable device that carries the first processing device.

12. The computer-implemented method of claim 11, wherein the same portable device is a personal health device such as a toothbrush.

13. The computer-implemented method of any of claims 1 to 12, further comprising, responsive to the second prediction of the reliability of the output data indicating that the reliability meets one or more second predetermined criteria:
retraining or further training the machine-learning model using the input data and/or output data; and/or
controlling a user interface to provide a user-perceptible indication of the second prediction of the reliability.

14. A computer program product comprising computer program code means which, when executed by a distributed system comprising a first processing device and a second processing device, causes the distributed system to perform all of the steps of the method according to any of claims 1 to 13.

15. A distributed system for predicting the reliability of output data produced by a machine-learning model after processing input data, the distributed system comprising:
a first processing device configured to:
process the input data and/or the output data using a first reliability prediction algorithm to produce a first prediction of the reliability of the output data; and
responsive to the first prediction of the reliability of the output data indicating that the reliability meets one or more predetermined criteria, provide the input data and/or the output data to a second processing device, different to the first processing device; and
the second processing device configured to process any received input data and/or output data using a second reliability prediction algorithm to produce a second prediction of the reliability of the output data,
wherein the first reliability prediction algorithm uses fewer processing resources than the second reliability prediction algorithm.
